# EUROPEAN PATENT APPLICATION

(11) **EP 4 546 104 A1**
(43) Date of publication of application: **30.04.2025**
(21) Application number: 24175089.2
(22) Date of filing: 10.05.2024
(51) Int. Cl.: G06F 3/0488, G06F 3/04883, G06F 3/04886

(54) **APPLICATION DISPLAY METHOD, APPLICATION DISPLAY DEVICE AND STORAGE MEDIUM**

(30) Priority: 24.10.2023 CN 202311386756
(71) Applicant: Beijing Xiaomi Mobile Software Co., Ltd., Beijing 100085 (CN)
(72) Inventor: LI, Siqi, Beijing, 100085 (CN); YANG, Huiying, Beijing, 100085 (CN); LI, Jiayan, Beijing, 100085 (CN)
(74) Representative: Stöckeler, Ferdinand

(57) **Abstract**

An application display method includes: entering a first display mode in response to detecting a first operation by an electronic apparatus, wherein the first display mode includes a main display area, a recent task display area and a frequently-used application display area, and the recent task display area is in a first area adjacent to a first edge of the main display area, and the frequently-used application display area is in a second area adjacent to a second edge of the main display area; and in response to entering the first display mode, displaying in the recent task display area an application that the electronic apparatus has run within a set time before a current time, displaying in the main display area a first currently active application upon detection of the first operation by the electronic apparatus, and displaying in the frequently-used application display area a preset application.

## Description

### FIELD

The present invention relates to the field of terminals, and more particularly, to an application display method, an application display device and a storage medium.

### BACKGROUND

With the development of communication technology, especially the rapid development of intelligent terminals, more and more kinds of applications are installed in terminals. Users often need to switch among a current application, recent tasks, desktop and other areas to realize multi-window task display control.

In the related art, floating small windows and other methods can be used to perform multi-window task display control on electronic apparatuses, but the cost of task management is still high, and addition of foreground application display is complex.

### SUMMARY

In order to overcome the problems existing in the related art, the present invention provides an application display method, an application display device and a storage medium.

According to a first aspect of embodiments of the present invention, there is provided an application display method, including: entering a first display mode in response to detecting a first operation by an electronic apparatus, in which the first display mode includes a main display area, a recent task display area and a frequently-used application display area, the recent task display area is in a first area adjacent to a first edge of the main display area, and the frequently-used application display area is in a second area adjacent to a second edge of the main display area; and in response to entering the first display mode, displaying in the recent task display area an application that the electronic apparatus has run within a set time before a current time, displaying in the main display area a first currently active application upon detection of the first operation by the electronic apparatus, and displaying in the frequently-used application display area a preset application.

In an embodiment, the application display method further includes: performing display control on a target display area based on a second operation, in response to detecting the second operation in the first display mode, in which the target display area includes at least one of: the main display area, the recent task display area and the frequently-used application display area.

In an embodiment, performing the display control on the target display area based on the second operation includes: in response to that the second operation includes an adjustment operation on a display position of a first application window displayed in the main display area, displaying the first application window in the main display area based on the display position corresponding to the adjustment operation, and keeping display positions of the recent task display area and the frequently-used application display area unchanged.

In an embodiment, performing the display control on the target display area based on the second operation includes: performing display control on an application displayed in the target display area based on the second operation.

In an embodiment, performing the display control on the application displayed in the target display area based on the second operation includes: in response to the second operation for switching a first application currently displayed in the main display area to a second application, displaying the second application in the main display area, and displaying the first application at a first place in an application queue displayed in the recent task display area. The second application includes an application selected from the recent task display area, or an application selected from the frequently-used application display area, or an application selected from the main display area.

In an embodiment, performing the display control on the application displayed in the target display area based on the second operation includes: in response to the second operation for closing a first application currently displayed in the main display area, in which the number of the first application is one, closing the first application displayed in the main display area and displaying a desktop application.

In an embodiment, performing the display control on the application displayed in the target display area based on the second operation includes: in response to that the second operation includes dragging a third application from the recent task display area and/or the frequently-used application display area to the main display area, displaying the third application in the main display area in a display manner matching a hot spot location where the third application is dragged to the main display area. The display manner includes split screen display and/or floating window display, and different display manners correspond to different hot spot locations.

In an embodiment, the application display method further includes: in response to that the third application belongs to the recent task display area, filling a vacancy in the recent task display area by an application behind the third application in an application queue displayed in the recent task display area sequentially according to a closing time sequence.

In an embodiment, performing the display control on the application displayed in the target display area based on the second operation includes: in response to that the second operation includes updating an application displayed in the recent task display area, updating the application displayed in the recent task display area in the recent task display area according to a closing time sequence of the application in an application queue displayed in the recent task display area.

In an embodiment, the application display method further includes: in response to detecting a third operation of exiting the first display mode, exiting the first display mode, and displaying a fourth application according to a display manner of displaying the fourth application in the main display area upon detection of the third operation.

In an embodiment, detecting the first operation includes: detecting a first control operation on a first control in an application interface or a desktop application interface displayed on the electronic apparatus, and determining that the first operation is detected, in which a second operation and/or a third operation is a second control operation performed on the first control in the first display mode.

In an embodiment, the application display method further includes: maintaining a current application layout after the first operation is detected, and directly entering the first display mode.

In an embodiment, applications displayed in the target display area include an application existing in an original application layout and an application included in the main display area based on the second operation.

According to a second aspect of the present invention, there is provided an application display device, including a processor; and a memory for storing processor-executable instructions in which the processor is configured to perform the application display method described in the first aspect or any one of embodiments of the first aspects when executing the processor-executable instructions.

According to a third aspect of the present invention, there is provided a storage medium having stored therein instructions that, when executed by a processor, perform the application display method described in the first aspect or any one of embodiments of the first aspects.

The technical solutions according to embodiments of the present invention have the following beneficial effects. In the first display mode, users can control display of a plurality of application programs or windows through intuitive operations in the main display area, the recent task display area and the frequently-used application display area, by entering the first display mode through the first operation, which makes multi-task management more natural and user-friendly. Through this intuitive display mode, users can manage the plurality of applications more easily without switching among different applications frequently, improving the multitasking efficiency.

It is to be understood that both the foregoing general description and the following detailed description are exemplary and explanatory only and are not restrictive of the present invention.

### BRIEF DESCRIPTION OF DRAWINGS

The accompanying drawings, which are incorporated in and constitute a part of this specification, illustrate embodiments consistent with the invention and together with the description, serve to explain the principles of the invention.
FIG. 1 is a flow chart of an application display method according to an embodiment of the present invention.
FIG. 2 is a schematic diagram of a first display mode according to an embodiment of the present invention.
FIG. 3 is a schematic diagram of entering a first display mode from a desktop according to an embodiment of the present invention.
FIG. 4 is a schematic diagram of entering a first display mode from an application according to an embodiment of the present invention.
FIG. 5 is a flow chart of an application switching method according to an embodiment of the present invention.
FIG. 6 is a schematic diagram of an application switching method according to an embodiment of the present invention.
FIG. 7 is a schematic diagram of a first application closing method according to an embodiment of the present invention.
FIG. 8 is a schematic diagram of a hot spot location according to an embodiment of the present invention.
FIG. 9A is a schematic diagram of dragging a third application from a recent task display area according to an embodiment of the present invention.
FIG. 9B is a schematic diagram of dragging a third application from a recent task display area according to another embodiment of the present invention.
FIG. 10A is a schematic diagram of dragging a third application from a frequently-used application display area according to an embodiment of the present invention.
FIG. 10B is a schematic diagram of dragging a third application from a frequently-used application display area according to another embodiment of the present invention.
FIG. 11 is a schematic diagram of filling a recent task display area according to an embodiment of the present invention.
FIG. 12 is a schematic diagram of exiting a first display mode according to an embodiment of the present invention.
FIG. 13 is a flow chart of an application closing method according to an embodiment of the present invention.
FIG. 14 is a schematic diagram of an application closing method through a first control according to an embodiment of the present invention.
FIG. 15 is a schematic diagram of an application closing method through a first control according to another embodiment of the present invention.
FIG. 16 is a block diagram of an application display device according to an embodiment of the present invention.
FIG. 17 is a block diagram of an apparatus for application display according to an embodiment of the present invention.

### DETAILED DESCRIPTION

Embodiments of the present invention are described in detail below, and examples of the embodiments are shown in accompanying drawings. In the description with reference to the drawings, unless otherwise indicated, the same numbers in different drawings indicate the same or similar elements. Embodiments described below do not represent all possible embodiments consistent with the present invention.

An application display method according to embodiments of the present invention can be applied to display control of an application program or a task window on an electronic apparatus.

The application display method according to embodiments of the present invention can be executed by an electronic apparatus that may be any apparatus including a display component and a touch component and using electronic components and technologies to perform specific functions or tasks. For example, in the embodiments described below, the electronic apparatus may be called a terminal, a mobile terminal, an intelligent terminal, and the like. The electronic apparatus can also be called user equipment (UE), mobile station (MS) and so on, such as a hand-held or vehicle-mounted device with a touch display function. Examples of the electronic apparatus can include: mobile phones, tablets, laptops, palmtop computers, mobile Internet devices (MID), wearable devices, virtual reality (VR) devices, augmented reality (AR) devices, intelligent distribution network devices, wireless terminals in industrial control, wireless terminals in unmanned driving, etc.

In current application scenarios of the electronic apparatus, users have increasingly diverse needs, and often require simultaneous use of a plurality of applications to meet the needs in different scenes. Consequently, it is not easy to display an ideal multi-task combination conveniently on a single apparatus.

Although there are some display methods, such as split screens, small windows and quick switching between applications that have been opened, a current layout of existing applications still needs changing, or there are problems such as high task management cost and complex steps for addition of foreground application display.

Accordingly, embodiments of the present invention provide an application display method. By entering a first display mode through a first operation, in the first display mode, users can control display of a plurality of application programs or windows through an intuitive operation in a main display area, a recent task display area and a frequently-used application display area, which makes multi-task management more natural and user-friendly.

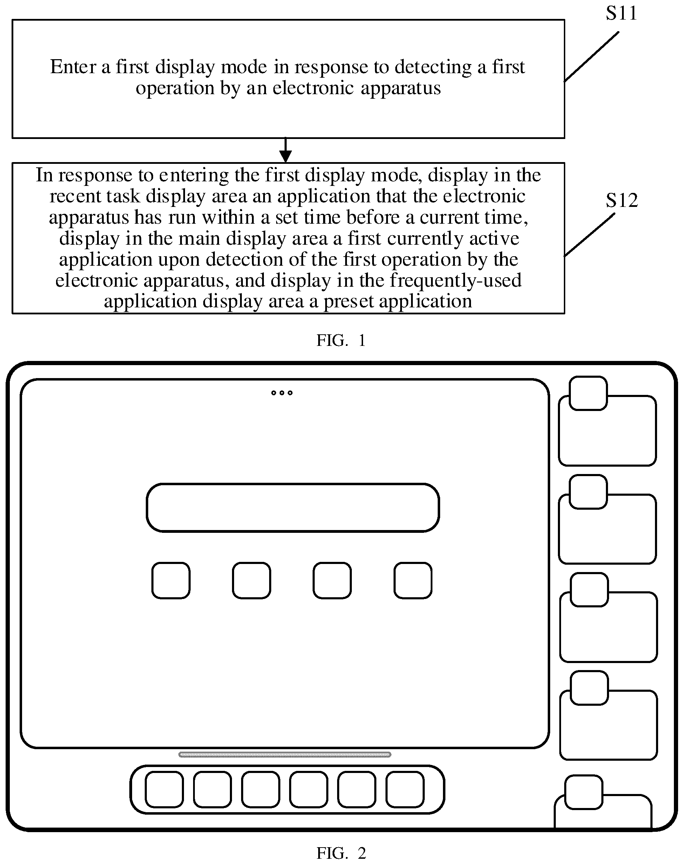

FIG. 1 is a flow chart of an application display method according to an embodiment of the present invention. As shown in FIG. 1, the application display method includes steps S11 to S12.

In step S11, a first display mode is entered, in response to the electronic apparatus detecting the first operation.

When it is detected that a user performs the first operation during a current application interface operation, the first display mode can be directly entered for operation without other additional operations.

The first display mode includes a main display area, a recent task display area and a frequently-used application display area, the recent task display area is in a first area adjacent to a first edge of the main display area, and the frequently-used application display area is in a second area adjacent to a second edge of the main display area.

In an embodiment, in the current interface, when the electronic apparatus detects that the user slides a rod control for a certain distance, it enters the first display mode.

For example, special screen touch gestures can also be introduced as the first operation to trigger the entry into the first display mode, such as detecting that the user makes a specific gesture on the electronic apparatus screen to trigger the first display mode. This gesture can be to draw a specific path on the screen, or click a specified number of times in a specified area.

In step S12, in response to entering the first display mode, an application that the electronic apparatus has run within a set time before a current time is displayed in the recent task display area, a first currently active application upon detection of the first operation by the electronic apparatus is displayed in the main display area, and a preset application is displayed in the frequently-used application display area.

FIG. 2 is a schematic diagram of a first display mode according to an embodiment of the present invention. As shown in FIG. 2, the first display mode includes a main display area, a recent task display area and a frequently-used application display area.

The application that the electronic apparatus has run within a set time before the current time are displayed in the recent task display area, the first currently active application of the electronic apparatus when the first operation is detected is displayed in the main display area, and the preset applications are displayed in the frequently-used application display area.

By displaying all the applications that the electronic apparatus has run within a set time before the current time in the recent task display area, and displaying the applications that are frequently used in the frequently-used application display area, and allowing users to customize the frequently-used applications, users do not need to return to a home screen or the application drawer to find applications frequently, thus saving time and helping to better organize and manage the multi-task window.

In an embodiment, the first display mode can be entered from an application program or system desktop currently running in the foreground. The layout of the current application of the electronic apparatus can be maintained after the first operation is detected, while the first display mode can be directly entered without triggering other operations.

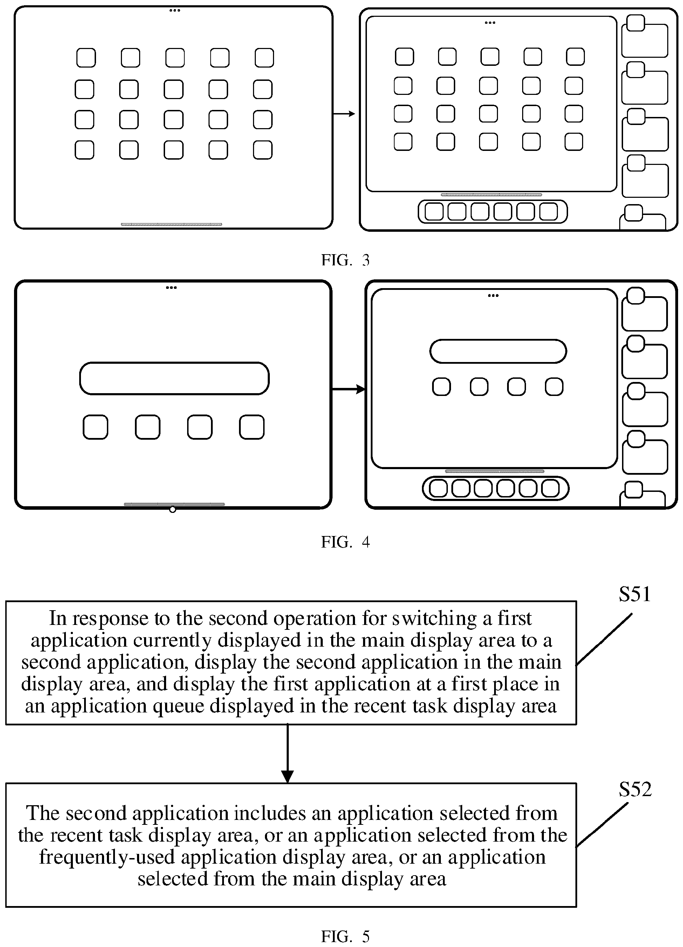

For example, FIG. 3 is a schematic diagram of entering the first display mode from the desktop according to an embodiment of the present invention. As shown in FIG. 3, the currently active application is the system desktop. In the system desktop, the first operation of sliding up rod control is performed, when the first operation is detected, the first display mode is directly entered from the desktop with the desktop as the main display area, and the recent task display area and the frequently-used application display area are respectively displayed in the side areas of the desktop.

For another example, FIG. 4 is a schematic diagram of entering the first display mode from an application according to an embodiment of the present invention. As shown in FIG. 4, the currently active application is the first application. In the first application, the first operation of the sliding up rod control is performed, and the layout will not be changed when the first operation is detected, and the first application is directly used as the main display area of the first display mode, and the recent task display area and the frequently-used application display area are respectively displayed in the side areas of the desktop.

In embodiments of the present invention, the first display mode is entered when the first operation is detected. In the first display mode, through the main display area, the recent task display area and the frequently-used application display area, users can control the display of a plurality of application programs or windows through intuitive operations, which makes the multi-task management and application display control more natural and user-friendly.

In an embodiment, in response to detecting a second operation in a first display mode, based on the second operation, a target display area is controlled, and the target display area includes at least one of the following: a main display area, a recent task display area and a frequently-used application display area.

In embodiments of the present invention, after entering the first display mode, a second operation can be performed, and based on the second operation, display control can be performed on the required application display layout from the main display area, the recent task display area and the frequently-used application display area. Through the recent task display area, users can clearly see the recently opened applications, which makes it easier to manage and switch multitasks. Through the frequently-used application display area, users don't need to remember or search for the required application, thus improving the efficiency of display control.

In an embodiment, in response to that the second operation includes the adjustment operation of the display position of the first application window displayed in the main display area, the first application window is displayed in the main display area based on the display position corresponding to the adjustment operation, and the display positions of the recent task display area and the frequently-used application display area are kept unchanged.

In embodiments of the present invention, the first application window is displayed in the main display area based on the display position corresponding to the adjustment operation, and the positions of the recent task display area and the frequently-used application display area will not change. This helps to avoid the occlusion problem encountered by users in display control and provides a clearer view. Users don't have to worry about the display being accidentally moved or hidden, thus reducing possible confusion and errors in display control.

In an embodiment, based on the second operation, display control is performed on the application displayed in the target display area.

In embodiments of the present invention, display control is performed on the application that needs to be displayed in the target display area based on the second operation. Through this visual display method, the user can control the display of a plurality of application programs or windows through intuitive operation, thus improving the efficiency of display control.

In an embodiment, when entering the first display mode, the applications displayed in the target display area may include applications existing in the original application layout of the screen and applications included in the main display area based on the second operation.

FIG. 5 is a flow chart of an application switching method according to an embodiment of the present invention. As shown in FIG. 5, the application display method includes steps S51 to S52.

In step S51, in response to the second operation for switching a first application currently displayed in the main display area to a second application, the second application is displayed in the main display area, and the first application is displayed at a first place in an application queue displayed in the recent task display area.

In step S52, the second application includes an application selected from the recent task display area, or an application selected from the frequently-used application display area, or an application selected from the main display area.

Through the recent task display area, frequently-used application display area or in the main display area, users can choose to switch the application currently displayed in the main display area. When the switch is made, the application programs previously displayed in the main display area will be placed at the top of the application queue displayed in the recent task display area, and will not be closed immediately.

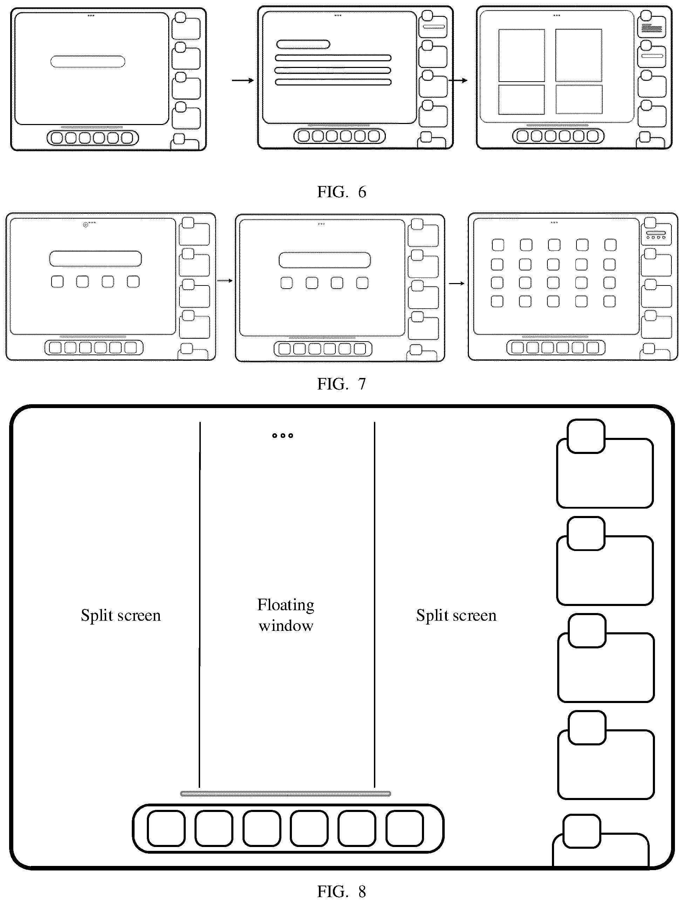

FIG. 6 is a schematic diagram of an application switching method according to an embodiment of the present invention. As shown in FIG. 6, the application currently displayed in the main display area is changed from the first application to the second application by clicking on the recent task display area. After switching, the first application will be placed at the top of the application queue displayed in the recent task display area. It can also switch again through the frequently-used application display area, and the application currently displayed in the main display area is changed from the second application to the third application. After switching, the second application will be placed in the first place in the application queue displayed in the recent task display area, and the first application will be placed in the second place in the application queue displayed in the recent task display area.

In embodiments of the present invention, the switched application is displayed at the top of the nearest taskbar, which helps to maintain the continuity of multi-task management and display control. Users can return to their previous tasks at any time without reopening the application.

In an embodiment, in response that the second operation is used for closing the first application currently displayed in the main display area and the number of the first applications is one, the displayed first application is closed in the main display area, and the desktop application is displayed.

FIG. 7 is a schematic diagram of a first application closing method according to an embodiment of the present invention. As shown in FIG. 7, the first application can be closed by an operation button set in the main display area. When the first application is the only application in the main display area, the system desktop can be displayed without leaving the first display mode. In addition, the closed application is displayed in the recent task display area, so that the application can be opened again at any time.

In embodiments of the present invention, the second operation is configured to close the first application currently displayed in the main display area, and when the first application is the only application in the main display area, the system desktop can be displayed without leaving the first display mode. Through the application display method in embodiments of the invention, the application program and the desktop can be switched more quickly, and the work efficiency is improved, especially when the desktop content needs to be frequently viewed such as when users need to view controls, files or shortcuts on the desktop.

In an embodiment, in response to that the second operation includes dragging a third application from a recent task display area and/or a frequently-used application display area to a main display area, and the third application is displayed in the main display area according to the display mode matching the hot spot location where the third application is dragged to the main display area, and the display mode includes a split screen display and/or a floating window display, and different display modes correspond to different hot spot locations.

FIG. 8 is a schematic diagram of a hot spot location according to an embodiment of the present invention. As shown in FIG. 8, it can be set that when dragging the third application from the recent task display area and/or the frequently-used application display area to the two sides of the main display area, the third application is displayed in a split screen, and when dragging the third application to the middle position of the main display area, the third application is displayed in a floating window.

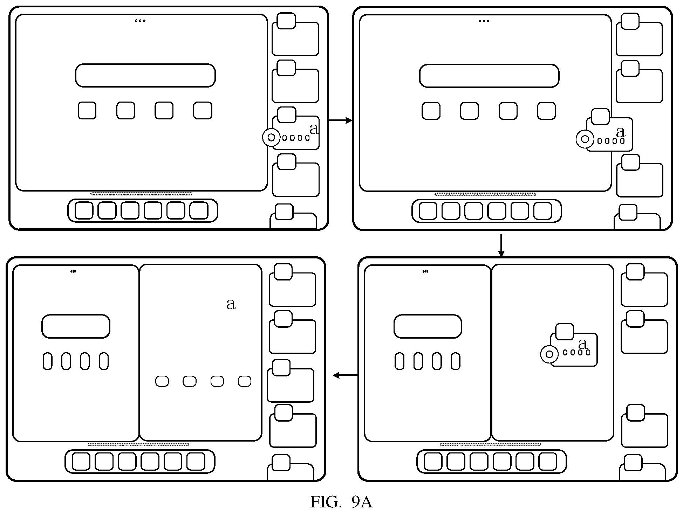

FIG. 9A is a schematic diagram of dragging a third application from the recent task display area according to an embodiment of the present invention. As shown in FIG. 9A, application "a" is selected from the recent task display area and dragged to the side position of the main display area. After the drag is completed, the application "a" will be automatically displayed in a split screen according to the dragged hot spot location.

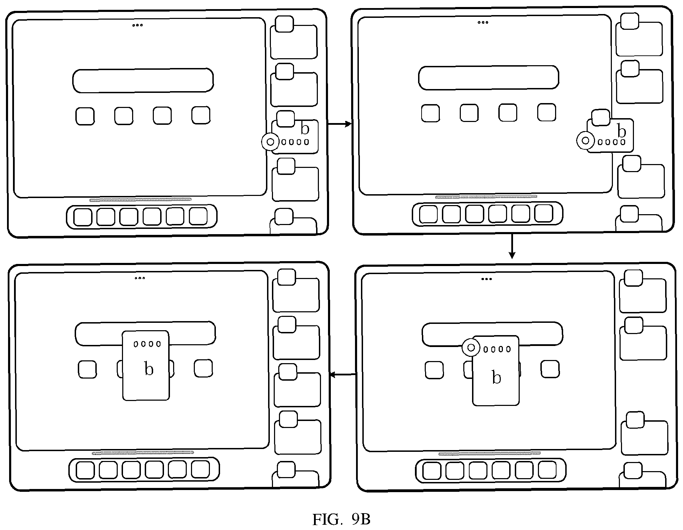

FIG. 9B is another schematic diagram of dragging the third application from the recent task display area according to an embodiment of the present invention. As shown in FIG. 9B, application "b" is selected from the recent task display area and dragged to the middle position of the main display area. After the drag is completed, the application "b" will be automatically displayed in the floating window according to the dragged hot spot location.

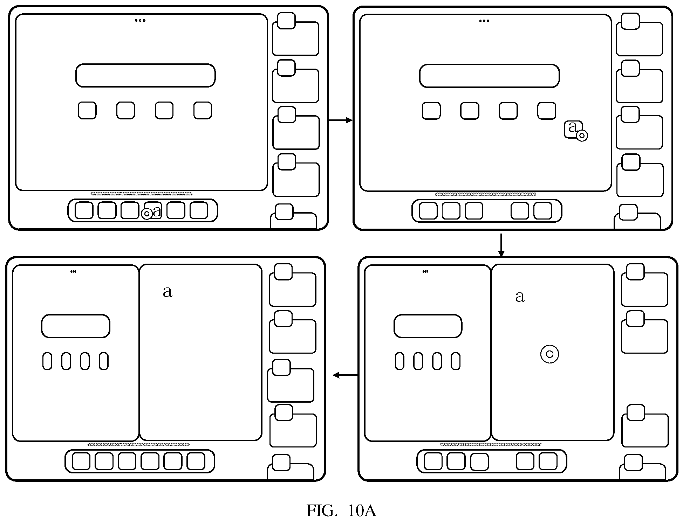

FIG. 10A is a schematic diagram of dragging a third application from a frequently-used application display area according to an embodiment of the present invention. As shown in FIG. 10A, application "a" is selected from the frequently-used application display area and dragged to the side position of the main display area. After the drag is completed, the application "a" will be automatically displayed in a split screen according to the dragged hot spot location.

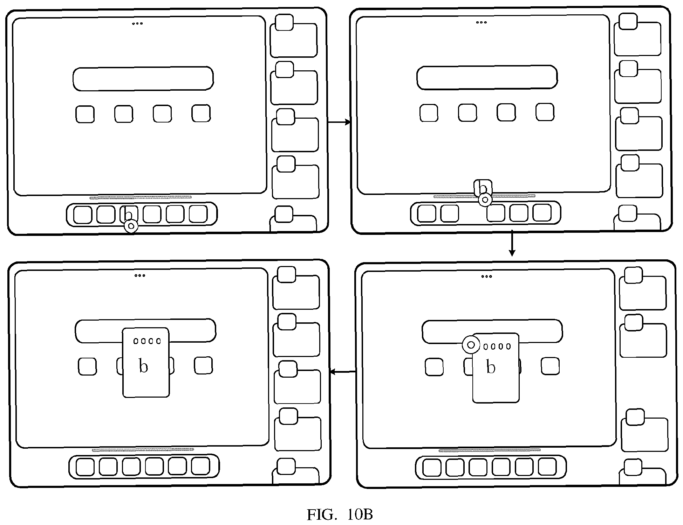

FIG. 10B is another schematic diagram of dragging the third application from the frequently-used application display area according to an embodiment of the present invention. As shown in FIG. 10B, application "b" is selected from the frequently-used application display area and dragged to the middle position of the main display area. After the drag is completed, the application "b" will be automatically displayed in the floating window according to the dragged hot spot location.

The task management of multi-applications window can be realized by dragging applications from the recent task display area and/or the frequently-used application display area to the main display area. The simultaneous display of a plurality of applications can be realized through split screen display and/or floating window display. Moreover, different display modes can be directly selected according to the different dragged hot spot locations without other additional operations.

In embodiments of the present invention, by dragging the application from the recent task display area and/or the frequently-used application display area to the main display area, the multi-task window combination required by the user can be completed quickly and conveniently, thus making full use of the screen space and improving the work efficiency. Moreover, the position of the drag can be changed as needed, thus switching between the split screen and the small window at any time, which provides a smooth multi-task management mode without complicated operation.

In an embodiment, in response to that the third application belongs to the recent task display area, an application that is displayed behind the third application in an application queue displayed in the recent task display area fill a vacancy sequentially according to a closing time sequence.

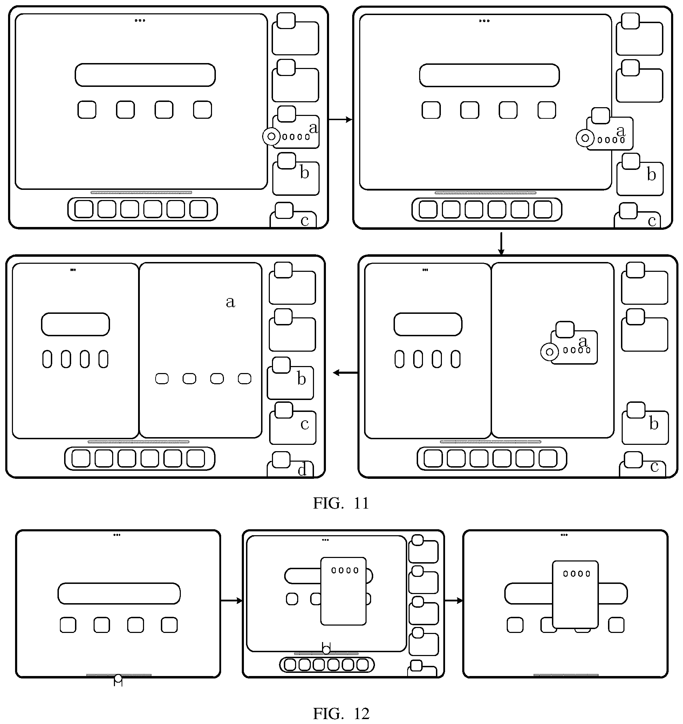

FIG. 11 is a schematic diagram of filling the recent task display area according to an embodiment of the present invention. As shown in FIG. 11, applications a, b, c and d are displayed in the recent task display area in turn according to a closing time sequence. If application "a" is dragged from the recent task display area to the side area of the main display area, other applications b, c and d can automatically fill a vacancy in the recent task display area according to the closing time sequence after application "a" is displayed in a split screen.

In embodiments of the present invention, other applications can automatically fill in the recent task display area according to the closing time sequence, thus filling the vacancy of the application dragged to the home screen. This helps to maintain the continuity and improve user-friendliness of display control. Users don't have to manually rearrange applications, reducing confusion and possible errors. Moreover, it is ensured that the applications in the recent task display area remain in order, which helps to make full use of screen space and improves work efficiency.

In an embodiment, in response to that the second operation includes updating the applications displayed in the recent task display area, in the recent task display area, the applications displayed in the recent task display area are updated according to the time sequence in which the applications in the application queue displayed in the recent task display area are closed.

In embodiments of the present invention, in response to that the second operation includes updating the application displayed in the recent task display area, the application can be displayed in the recent task display area according to the closing time sequence, which helps to maintain the consistency of task management. Users can access applications according to their recent activities without searching in the list, which improves users' work efficiency.

In an embodiment, the first display mode is exited in response to detecting a third operation to exit the first display mode, and the fourth application is displayed according to the display mode of the fourth application displayed in the main display area when the third operation is detected.

Through the above operations, the application layout required by the user, that is, the fourth application, is obtained in the main display area. At this time, users can directly exit the first display mode in the third operation, and display the combination of windows in full screen.

FIG. 12 is a schematic diagram of an exit from the first display mode according to an embodiment of the present invention. As shown in FIG. 12, the first display mode is entered through a first operation under the current layout of displaying the first active application. In the first display mode, the third application is added to the main display area in the form of a floating window by dragging to perform the third operation, such as sliding down the rod control to a certain distance. Through the third operation, the first display mode is directly exited, and the set application layout can be directly displayed in full screen.

In embodiments of the present invention, seamless switching from the first display mode to the full screen display can be realized through the third operation without unnecessary steps or clicks, which provides a faster and smoother handover experience.

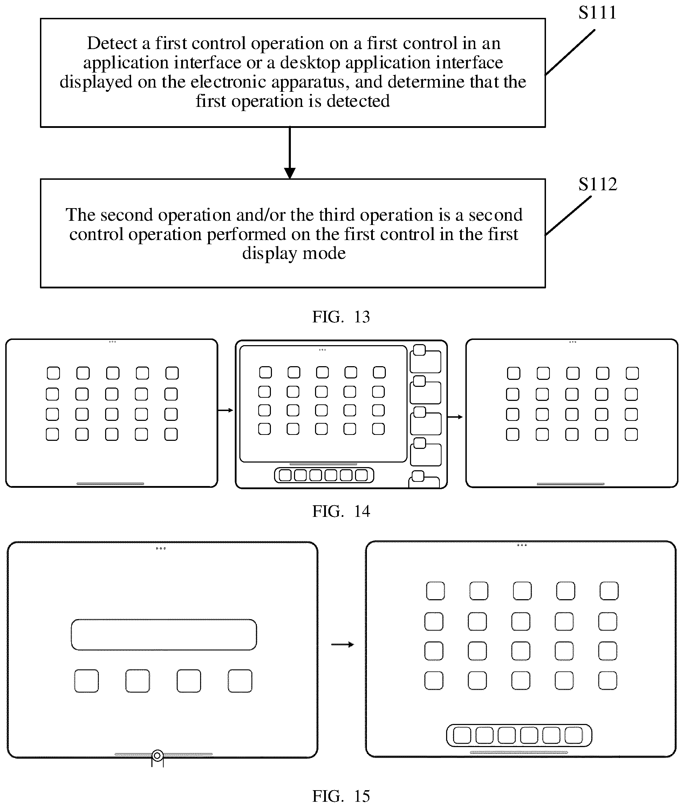

FIG. 13 is a flow chart of an application closing method according to an embodiment of the present invention. As shown in FIG. 13, the application display method includes steps S111 to S112.

In step S111, a first control operation on a first control is detected in an application interface or a desktop application interface displayed on the electronic apparatus, and it is determined that the first operation is detected.

In step S112, a second operation and/or a third operation is a second control operation performed on the first control in the first display mode.

By controlling the first control, the first display mode can be directly entered from the application interface or the system desktop application interface. In the first display mode, the first control can be reused for other operations.

FIG. 14 is a schematic diagram of an application closing method through a first control according to an embodiment of the present invention. As shown in FIG. 14, after the first display mode can be directly entered from the desktop by operating the first control, the first display mode can be directly exited through the first control in the first display mode. For example, after sliding up the rod control on the desktop to a certain distance, enter the first display mode. In the first display mode, users can also exit the first display mode by sliding the rod control.

FIG. 15 is a schematic diagram of another application closing method through a first control according to an embodiment of the present invention. As shown in FIG. 15, when an application is displayed in full screen, the current application can be directly closed to return to the system desktop through the first control.

Based on the same concept, embodiments of the present invention also provide an application display device.

It can be understood that the application display device according to embodiments of the present invention includes corresponding hardware structures and/or software modules for executing various functions in order to realize the above functions. Combining the units and algorithm steps of various examples disclosed in embodiments of the present invention, embodiments of the present invention can be realized in the form of hardware or a combination of hardware and computer software. Whether a function is executed by hardware or computer software drives hardware depends on the specific application and design constraints of the technical solution. Those skilled in the art can use different methods to realize the described functions for each specific application, while this realization should not be considered beyond the scope of the technical solution of the disclosed embodiment.

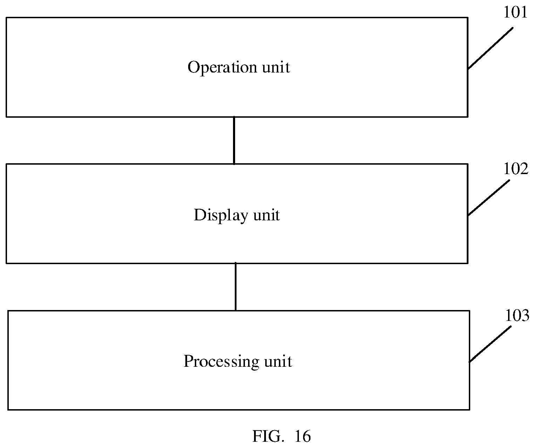

FIG. 16 is a block diagram of an application display device according to an embodiment of the present invention. Referring to FIG. 16, the application display device includes: an operation unit 101 and a display unit 102. The operation unit 101 is configured to enter a first display mode in response to detecting a first operation by an electronic apparatus, in which the first display mode includes a main display area, a recent task display area and a frequently-used application display area, the recent task display area is in a first area adjacent to a first edge of the main display area, and the frequently-used application display area is in a second area adjacent to a second edge of the main display area. The display unit 102 is configured to, in response to entering the first display mode, display in the recent task display area an application that the electronic apparatus has run within a set time before a current time, display in the main display area a first currently active application upon detection of the first operation by the electronic apparatus, and display in the frequently-used application display area a preset application.

In some embodiments, the application display device further includes a processing unit 103 configured to perform display control on a target display area based on a second operation, in response to detecting the second operation in the first display mode. The target display area includes at least one of: the main display area, the recent task display area and the frequently-used application display area.

In some embodiments, the processing unit 103 performs the display control on the target display area based on the second operation by: in response to that the second operation includes an adjustment operation on a display position of a first application window displayed in the main display area, displaying the first application window in the main display area based on the display position corresponding to the adjustment operation, and keeping display positions of the recent task display area and the frequently-used application display area unchanged.

In some embodiments, the processing unit 103 performs the display control on the target display area based on the second operation by: performing display control on an application displayed in the target display area based on the second operation.

In some embodiments, the processing unit 103 performs display control on the application displayed in the target display area based on the second operation by: in response to the second operation for switching a first application currently displayed in the main display area to a second application, displaying the second application in the main display area, and displaying the first application at a first place in an application queue displayed in the recent task display area. The second application includes an application selected from the recent task display area, or an application selected from the frequently-used application display area, or an application selected from the main display area.

In some embodiments, the processing unit 103 performs display control on the application displayed in the target display area based on the second operation by: in response to the second operation for closing a first application currently displayed in the main display area, in which the number of the first application is one, closing the first application displayed in the main display area and displaying a desktop application.

In some embodiments, the processing unit 103 performs display control on the application displayed in the target display area based on the second operation by: in response to that the second operation includes dragging a third application from at least one of the recent task display area or the frequently-used application display area to the main display area, displaying the third application in the main display area in a display manner matching a hot spot location where the third application is dragged to the main display area. The display manner includes split screen display and/or floating window display, and different display manners correspond to different hot spot locations.

In some embodiments, the processing unit 103 is further configured to: in response to that the third application belongs to the recent task display area, fill a vacancy in the recent task display area by an application behind the third application in an application queue displayed in the recent task display area sequentially according to a closing time sequence.

In some embodiments, the processing unit 103 performs display control on the application displayed in the target display area based on the second operation by: in response to that the second operation includes updating an application displayed in the recent task display area, updating the application displayed in the recent task display area according to a closing time sequence of the application in an application queue displayed in the recent task display area.

In some embodiments, the processing unit 103 is further configured to: in response to detecting a third operation of exiting the first display mode, exit the first display mode, and display a fourth application according to a display manner of displaying the fourth application in the main display area upon detection of the third operation.

In some embodiments, detecting the first operation includes detecting a first control operation on a first control in an application interface or a desktop application interface displayed on the electronic apparatus, and determining that the first operation is detected. The second operation and/or the third operation is a second control operation performed on the first control in the first display mode.

Regarding the application display device in the above embodiments, the specific way in which each module performs the operation has been described in detail in the embodiments of the application display method, and will not be described in detail here.

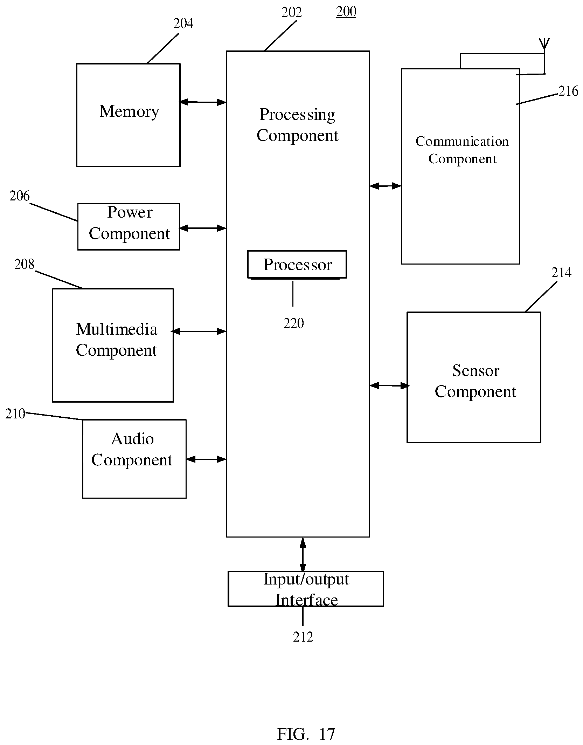

FIG. 17 is a block diagram of a device 200 for application display according to an embodiment of the present invention. For example, the device 200 can be a mobile phone, computer, digital broadcasting terminal, messaging device, game console, tablet device, medical device, fitness device, personal digital assistant, etc.

Referring to FIG. 17, the device 200 may include one or more of the following components: a processing component 202, a memory 204, a power component 206, a multimedia component 208, an audio component 210, an input/output (I/O) interface 212, a sensor component 214, and a communication component 216.

The processing component 202 generally controls the overall operation of the device 200, such as operations associated with display, telephone call, data communication, camera operation and recording operation. The processing component 202 may include one or more processors 220 to execute instructions to complete all or part of the steps of the application display method described above. In addition, the processing component 202 can include one or more modules to facilitate the interaction between the processing component 202 and other components. For example, the processing component 202 can include a multimedia module to facilitate interaction between the multimedia component 208 and the processing component 202.

The memory 204 is configured to store various types of data to support operations at the device 200. Examples of these data include instructions for any application or method operating on the device 200, contact data, phone book data, messages, pictures, videos, and the like. The memory 204 can be realized by any type of volatile or nonvolatile memory device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 206 provides power to various components of the device 200. The power component 206 may include a power management system, one or more power sources, and other components associated with generating, managing and distributing power for the device 200.

The multimedia component 208 includes a screen that provides an output interface between the device 200 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touch, sliding and gestures on the touch panel. The touch sensor may not only sense the boundary of a touch or sliding action, but also detect the duration and pressure related to the touch or sliding operation. In some embodiments, the multimedia component 208 includes a front camera and/or a rear camera. When the device 200 is in an operation mode, such as a shooting mode or a video mode, the front camera and/or the rear camera can receive external multimedia data. Each front camera and rear camera can be a fixed optical lens system or have focal length and optical zoom capability.

The audio component 210 is configured to output and/or input audio signals. For example, the audio component 210 includes a microphone (MIC), which is configured to receive external audio signals when the device 200 is in an operation mode, such as a call mode, a recording mode and a voice recognition mode. The received audio signal may be further stored in the memory 204 or transmitted via the communication component 216. In some embodiments, the audio component 210 further includes a speaker for outputting audio signals.

The I/O interface 212 provides an interface between processing component 202 and peripheral interface modules, and the above-mentioned peripheral interface modules can be keyboards, click wheels, buttons, etc. These buttons may include, but are not limited to, home button, volume button, start button and lock button.

The sensor component 214 includes one or more sensors for providing various aspects of status assessment for the device 200. For example, the sensor component 214 can detect the open/closed state of the device 200, the relative positioning of components, such as the display and keypad of the device 200, the position change of the device 200 or a component of the device 200, the presence or absence of user contact with the device 200, the orientation or acceleration/deceleration of the device 200 and the temperature change of the device 200. The sensor component 214 may include a proximity sensor configured to detect the presence of a nearby object without any physical contact. The sensor component 214 may also include an optical sensor, such as a CMOS or CCD image sensor, for use in imaging applications. In some embodiments, the sensor component 214 may further include an acceleration sensor, a gyro sensor, a magnetic sensor, a pressure sensor or a temperature sensor.

The communication component 216 is configured to facilitate wired or wireless communication between the device 200 and other devices. The device 200 can access wireless networks based on communication standards, such as Wi-Fi, 2G or 3G, or their combination. In an embodiment, the communication component 216 receives a broadcast signal or broadcast related information from an external broadcast management system via a broadcast channel. In an embodiment, the communication component 216 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an embodiment, the device 200 may be implemented by one or more application specific integrated circuits (ASIC), digital signal processors (DSP), digital signal processing device(DSPD), programmable logic devices (PLD), field programmable gate arrays (FPGA), controllers, microcontrollers, microprocessors or other electronic components for performing the above methods.

In an embodiment, there is also provided a non-transitory computer-readable storage medium including instructions, such as the memory 204 including instructions, which can be executed by the processor 220 of the device 200 to complete the above method. For example, the non-transitory computer-readable storage medium can be ROM, random access memory (RAM), CD-ROM, magnetic tape, floppy disk, optical data storage device, etc.

It can be understood that "a plurality of" in the present invention means two or more, and other quantifiers are similarly interpreted. The term "and/or", which describes the relationship of related objects, means that there are three kinds of relationships. For example, A and/or B can mean that A exists alone, A and B exist together, and B exists alone. The symbol "/"generally indicates that the associated objects are in an "or" relationship. The singular forms "a/an", "said" and "the" are also intended to include plural forms, unless clearly indicated otherwise in the context.

It can further understood that terms "first" and "second" are configured to describe various information, but these information should not be limited to these terms. These terms are only used to distinguish the same type of information from each other and do not indicate a specific order or importance. In fact, the expressions "first" and "second" can be used interchangeably. For example, without departing from the scope of the present invention, first information may also be called second information, and similarly, second information may also be called first information.

It can be further understood that unless otherwise specified, the term "connection" includes direct connection between two members without other members, and indirect connection between two members through other members.

It can be further understood that although the operations are described in a specific order in the drawings in embodiments of the present invention, it should not be understood as requiring that these operations must be performed in a specific order or a serial order shown, or that all the operations shown must be performed to obtain a desired result. In certain circumstances, multitasking and parallel processing may be beneficial.

Other embodiments of the present invention will easily occur to those skilled in the art after considering the specification and practicing the present invention disclosed herein. This application is intended to cover any variations, uses or adaptations of the present invention, which follow the general principles of the present invention and include common sense or common technical means in this technical field that are not disclosed in the present invention.

It should be understood that the present invention is not limited to the precise structures described above and shown in the drawings, and various modifications and changes can be made without departing from its scope. The scope of the present invention is limited only by the scope of the appended claims.

## Claims

1. An application display method, comprising:
entering a first display mode in response to detecting a first operation by an electronic apparatus (S11), wherein the first display mode comprises a main display area, a recent task display area and a frequently-used application display area, and the recent task display area is in a first area adjacent to a first edge of the main display area, and the frequently-used application display area is in a second area adjacent to a second edge of the main display area; and
in response to entering the first display mode, displaying in the recent task display area an application that the electronic apparatus has run within a set time before a current time, displaying in the main display area a first currently active application upon detection of the first operation by the electronic apparatus, and displaying in the frequently-used application display area a preset application (S12).

2. The application display method according to claim 1, further comprising:
performing display control on a target display area based on a second operation, in response to detecting the second operation in the first display mode,
wherein the target display area comprises at least one of: the main display area, the recent task display area and the frequently-used application display area.

3. The application display method according to claim 2, wherein performing the display control on the target display area based on the second operation comprises:
in response to that the second operation comprises an adjustment operation on a display position of a first application window displayed in the main display area, displaying the first application window in the main display area based on the display position corresponding to the adjustment operation, and keeping display positions of the recent task display area and the frequently-used application display area unchanged.

4. The application display method according to claim 2 or 3, wherein performing the display control on the target display area based on the second operation comprises:
performing display control on an application displayed in the target display area based on the second operation.

5. The application display method according to claim 4, wherein performing the display control on the application displayed in the target display area based on the second operation comprises:
in response to the second operation for switching a first application currently displayed in the main display area to a second application, displaying the second application in the main display area, and displaying the first application at a first place in an application queue displayed in the recent task display area (S51),
wherein the second application comprises (S52) an application selected from the recent task display area, or an application selected from the frequently-used application display area, or an application selected from the main display area.

6. The application display method according to claim 4 or 5, wherein performing the display control on the application displayed in the target display area based on the second operation comprises:
in response to the second operation for closing a first application currently displayed in the main display area, wherein the number of the first application is one, closing the first application displayed in the main display area and displaying a desktop application.

7. The application display method according to any one of claims 4-6, wherein performing the display control on the application displayed in the target display area based on the second operation comprises:
in response to that the second operation comprises dragging a third application from the recent task display area and/or the frequently-used application display area to the main display area, displaying the third application in the main display area in a display manner matching a hot spot location where the third application is dragged to the main display area,
wherein the display manner comprises split screen display and/or floating window display, and different display manners correspond to different hot spot locations.

8. The application display method according to claim 7, further comprising:
in response to that the third application belongs to the recent task display area, filling a vacancy in the recent task display area by an application behind the third application in an application queue displayed in the recent task display area sequentially according to a closing time sequence.

9. The application display method according to any one of claims 4-8, wherein performing the display control on the application displayed in the target display area based on the second operation comprises:
in response to that the second operation comprises updating an application displayed in the recent task display area, updating the application displayed in the recent task display area according to a closing time sequence of the application in an application queue displayed in the recent task display area.

10. The application display method according to any one of claims 4-9, further comprising:
in response to detecting a third operation of exiting the first display mode, exiting the first display mode, and displaying a fourth application according to a display manner of displaying the fourth application in the main display area upon detection of the third operation.

11. The application display method according to any one of claims 1-10, wherein detecting the first operation comprises:
detecting a first control operation on a first control in an application interface or a desktop application interface displayed on the electronic apparatus, and determining that the first operation is detected (S 111),
wherein a second operation and/or a third operation is a second control operation performed on the first control in the first display mode (S1 12).

12. The application display method according to any one of claims 1-11, further comprising: maintaining a current application layout after the first operation is detected, and directly entering the first display mode.

13. The application display method according to claim 2, wherein applications displayed in the target display area comprise an application existing in an original application layout and an application included in the main display area based on the second operation.

14. An application display device, comprising:
a processor; and
a memory for storing processor-executable instructions;
wherein the processor is configured to perform the application display method according to any one of claims 1-13 when executing the processor-executable instructions.

15. A storage medium having stored therein instructions that, when executed by a processor of a terminal, cause the terminal to perform the application display method according to any one of claims 1-13.
